# EUROPEAN PATENT SPECIFICATION

(11) **EP 1 841 979 B1**
(45) Date of publication and mention of the grant of the patent: **06.04.2011**
(21) Application number: 05704712.8
(22) Date of filing: 14.01.2005
(51) Int. Cl.: F16D 25/08, B60K 23/02, F16D 48/02

(54) **ACTUATOR FOR A VEHICLE CLUTCH**
STELLGLIED FÜR EINE FAHRZEUGKUPPLUNG
ACTIONNEUR D'EMBRAYAGE DE VEHICULE

(43) Date of publication of application: 10.10.2007
(73) Proprietor: VOLVO LASTVAGNAR AB, 405 08 Göteborg (SE)
(72) Inventor: HEDMAN, Anders, S-440 30 Marstrand (SE); ZETTERSTRAND, Lars, S-412 82 Göteborg (SE)
(74) Representative: Fröhling, Werner Otto
(86) International application number: PCT/SE2005/000038
(87) International publication number: WO 2006/075938

(56) References cited:
- DE-A1- 10 018 678
- DE-A1- 19 714 226
- DE-A1- 19 716 600

## Description

### Field of the invention

The present invention relates to an arrangement for primarily manual control of a clutch of the slipping clutch type in a vehicle transmission, comprising members for generating and transmitting force and movement as set-point value for control of the clutch, an actuator which is arranged concentrically with the axis of rotation of the clutch and which operates with pressurized fluid, a servo valve for controlling the flow of pressurized fluid into and out of said actuator, and a member for feedback transmission of the position of said actuator to said servo valve.

### State of the art

Manually shifted vehicle transmissions are normally provided with a clutch of the slipping clutch type. This clutch may be used partly in order to set the vehicle gently in motion from stationary by means of the slip, partly when torsionally locked to transmit the engine torque when the vehicle is in motion, and partly to interrupt the rotational connection to the engine when shifting gear. In automatic transmission systems, clutches of the slipping clutch type can also smooth out fluctuations in the rotational speed when changing gear. In the cases enumerated above, there is a need to control the clutch. In manually shifted vehicle transmissions this is normally done by a pedal operated by the driver.

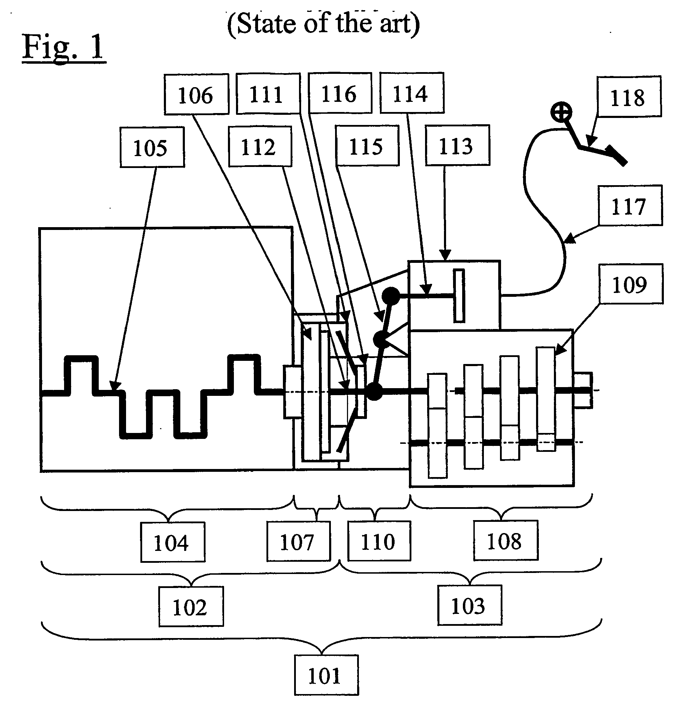

Fig. 1 shows a schematic view of an example of the drivetrain 101 for a rear wheel-drive vehicle in the state of the art. The drivetrain 101 comprises an engine 102 and a transmission 103. The engine 102 comprises an engine body 104 in which a crankshaft 105 rotates. Fixed to the rear end of the crankshaft 105 is a flywheel 106. The flywheel 106 is arranged in a flywheel housing 107. The transmission 103 comprises a transmission housing 108 with an assembly 109 of shafts and gears and a clutch housing 110. Gears in the transmission 103 are engaged and disengaged manually or automatically via an arrangement which is not shown. The clutch 111 is located in the clutch housing 110 where it is bolted to the flywheel 106 enclosing the input shaft 112 of the transmission 103. The clutch 111 is controlled by a clutch actuator 113, in which a piston rod 114 acts upon a throwout bearing 116 via a lever arm 115. The clutch actuator 113 is in turn controlled via a transmission member 117 of a clutch pedal 118. The transmission member 117 may comprise a mechanical linkage, a steel cable with covering, a hydraulic line or an electrical signal, for example. In a semi-automatic clutch the clutch actuator 113 is instead controlled by a mechatronic control system, for example. A clutch actuator 113, which is located next to the transmission together with a lever arm 115, is often referred to as a side-mounted clutch control.

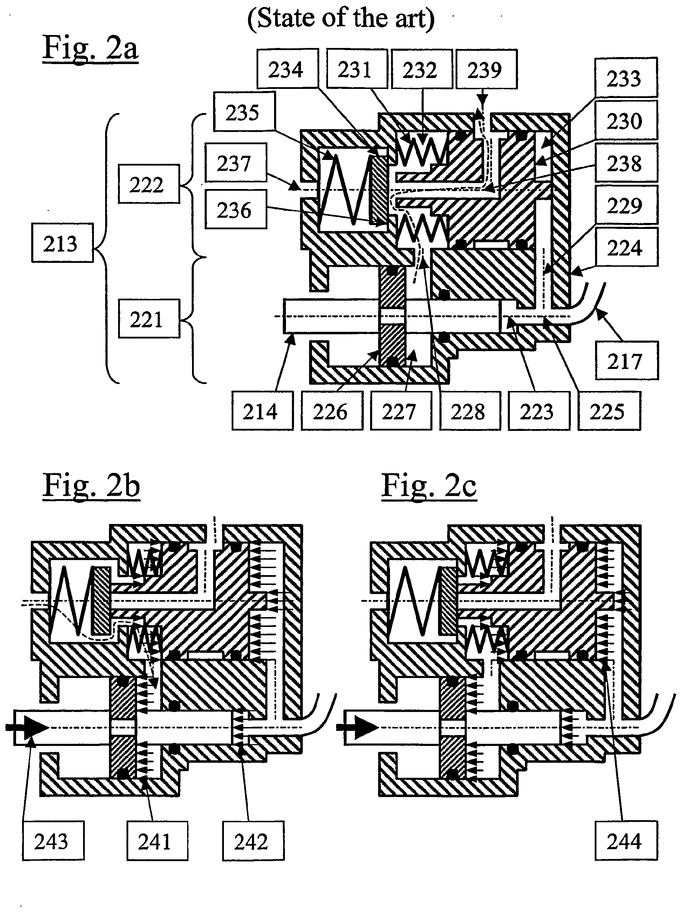

In heavy road vehicles, for example, such as trucks and buses, the force that is required in order to control the clutch is so great that servo assistance is often resorted to in order to make the work of the driver easier. The force from the pedal 118 via the transmission member 117 is thereby boosted by means of an external power source and a control member. In heavy road vehicles compressed air is often used as the external power source. Fig. 2a shows the basic principle of a typical clutch actuator 213, in which compressed air is used in order to provide servo assistance, so-called compressed air-based servo action. The clutch actuator 213 comprises a cylinder part 221 with piston rod 214 and a valve part 222. One end of the piston rod 214 is inserted into a hydraulic chamber 223 in the housing 224 of the clutch actuator 213. A hydraulic duct 225 connects the hydraulic chamber 223 to a hydraulic line 217, which by means of a flow of pressurized oil transmits force and movement from a clutch pedal, as shown, for example, in DE 102004006269.

Fixed to the piston rod 214 is a servo piston 226, which functions in a large-diameter servo chamber 227. When the servo chamber 227 is filled with compressed air, a force which endeavors to carry the piston rod 214 to the left in Fig. 2a acts on the piston rod 226. This force varies as a function of the pressure in the hydraulic chamber 223 and the hydraulic line 217 through the valve part 222, the function of which will be described below. The valve part 222 is connected on the one hand to the servo chamber 227 by a servo duct 228 and on the other to the hydraulic duct 225 by a side duct 229. The valve part 222 comprises a valve piston 230, which is forced to the right in Fig. 2a by a spring pack 231 located in a valve air chamber 232 connected to the servo duct 228, a valve hydraulic chamber 233 connected to the side duct 229, a seat valve 234 and a seat spring 235. The seat spring 235 endeavors to press the seat valve 234 against a seat 236 in the housing 224 of the clutch actuator 213. Compressed air is delivered through an air connection 237. When the seat valve 234 is pressed against the seat 236, the compressed air is prevented from passing the seat 236.

The valve piston 230 has an evacuation duct 238, which is connected to an evacuation outlet 239 in the housing 224. When the spring pack 231 has brought the valve piston 230 to the right in Fig. 2a, the evacuation duct 238 is also connected to the valve air chamber 232, the servo duct 228 and the servo chamber 227. Any compressed air in the servo chamber 227 can thereby flow out towards the evacuation outlet 239 as indicated by the dashed line in Fig. 2a.

When the driver depresses the clutch pedal, the hydraulic pressure increases not only in the hydraulic line 217 but also in the hydraulic chamber 223, the hydraulic duct 225, the side duct 229 and the valve hydraulic chamber 233. A force, which endeavors to carry the valve piston towards the left in Fig. 2a, then acts on the valve piston 230. With a sufficiently high hydraulic pressure, the so-called opening pressure, said force is greater than the aggregate pre-tensioning force in the spring pack 231 and the seat spring 235. This is shown in Fig. 2b, in which the valve piston 230 has moved to the left compared to the position in Fig. 2a. The valve piston 230 is there in contact with the seat valve 234, which is no longer in contact with the seat 236. This means i) that the compressed air from the air connection 237 can flow into the servo chamber 227, which is shown by a dashed line in Fig. 2b, and ii) that the evacuation duct 238 is closed by the seat valve 234. The air pressure in the servo chamber 227 then increases and gives rise to a servo force 241, which endeavors to carry the servo piston 226 and the piston rod 214 to the left in Fig. 2b. This servo force 241 boosts the hydraulic force 242 on the piston rod 214 from the hydraulic pressure in the hydraulic chamber 223. When the hydraulic force 242 and the servo force 241 together are greater than the counter-force 243 of the clutch, the piston rod 214 moves to the left in Fig. 2b.

The conditions in Fig. 2b are maintained while the driver continues to apply a force to the clutch pedal that is large enough to maintain the pressure in the hydraulic line 217, the hydraulic duct 225, the side duct 229 and the valve hydraulic chamber 233. If the driver were instead to keep the clutch pedal in a constantly depressed position, the flow in the hydraulic line 217 would be stopped. A slight movement of the piston rod 214 would then mean that the pressure in the hydraulic line 217, and hence also in the hydraulic duct 225, the side duct 229, the hydraulic chamber 223 and the valve hydraulic chamber 233 would fall. This gives rise to a new state of equilibrium in the valve part 222, which is shown in Fig. 2c. The force 244 on the valve piston 230 from the hydraulic pressure in the valve hydraulic chamber 233 has there fallen to such a degree that the opposing forces from the seat spring 235, the spring pack 231 and the air pressure in the valve air chamber 232 have carried the valve piston 230 to the right in comparison with Fig. 2b. The seat valve 234 has thereby come into contact with the seat 236. This shuts off the supply of compressed air to the servo chamber 227. Fig. 2c shows a state of equilibrium which can readily be influenced by the driver by moving the clutch pedal. If the clutch pedal is depressed, the pressure in the hydraulic line 217 increases. This carries the valve piston 230 to the left and produces the conditions according to Fig. 2b, more compressed air being able to flow into the servo chamber 227. This results in increased servo force 241 on the servo piston 226 and the piston rod 214. These then tend to move to the left in the figure, which is matched by a disengagement of the clutch. If, on the other hand, the clutch pedal is let in, the pressure in the hydraulic line 217 falls and the valve piston 230 is carried to the right. The conditions according to Fig. 2a are then reestablished, and the air pressure in the servo chamber 227 falls. The servo force 241 and the hydraulic force 242 are reduced. The piston rod 214 then tends to move to the right, which corresponds to engagement of the clutch.

The function of the clutch actuator 213 can be summarized by saying that the valve part 222 controls the pressure in the servo chamber 227, so that a servo force 241 is obtained, which boosts the hydraulic force 242. The servo force 241 increases until the piston rod 214 (and hence the throwout bearing) has been shifted by a distance corresponding to the extent to which the clutch pedal is depressed. In practice the hydraulic force 242 cannot be boosted to an infinite degree. With a very close relationship between the servo force 241 and the hydraulic force 242, the functioning of the valve part 222 becomes unstable. This then results in rapid and uncontrolled shifts between the positions in Figs. 2a, 2b and 2c. This can damage constituent parts and efforts are therefore made to avoid this by placing design limits on the magnitude of the servo force 241. The servo force 241 is typically around six times greater than the hydraulic force 242, which means that only a seventh of the work needed to disengage the clutch need derive from depression of the clutch pedal by the driver.

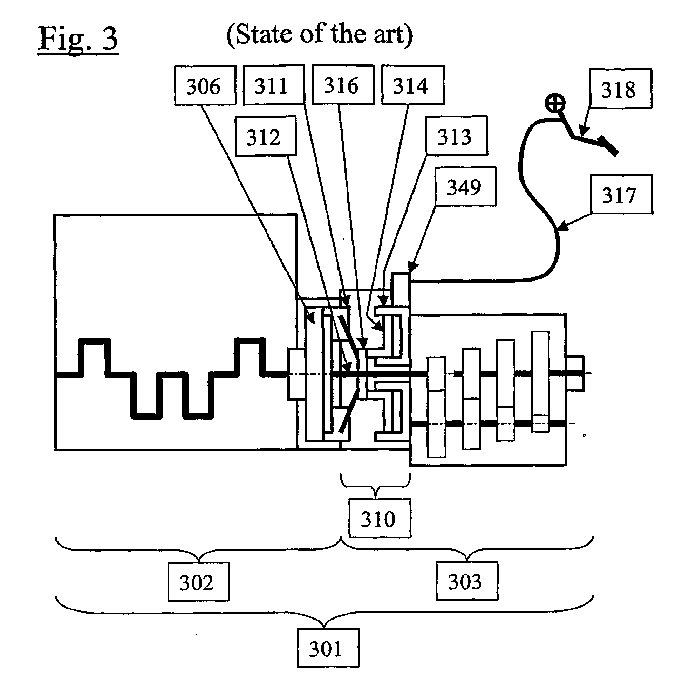

A side-mounted clutch control, as shown in Fig. 1, has the disadvantage that it takes up a lot of space on the outside of the drivetrain 101. This means that it can be difficult to find room for a side-mounted clutch control in the vehicle. A more compact known solution is to place the main part of the clutch control concentrically around the transmission input shaft. Fig. 3 shows the basic principle of this known technique. The drivetrain 301 comprises the engine 302 and the transmission 303. The clutch 311 is fixed to the flywheel 306. In the clutch housing 310 a clutch actuator 313 is placed concentrically with the input shaft 312 to the transmission 303. The piston 314 in the clutch actuator 313 acts directly upon the throwout bearing 316. A hydraulic line 317 transmits force and movement from a clutch pedal 318 to a valve member 349 of the clutch actuator 313.

Examples of concentric clutch actuators with servo action are shown, for example, in DE 19716600, DE 19714226 (both disclosing all features of the preamble of claim 1) and DE 10018678.

DE 19716600 in Fig. 1 shows a concentric clutch actuator, which comprises an actuating cylinder unit 52 and a valve 74. These correspond to the cylinder part 221 and the valve part 222 in Fig. 2a in this document. The actuating cylinder unit 52 further comprises a hydraulic annular cylinder 54 and a pneumatic annular cylinder 56. Both of these are concentric with the center axis A and act upon a throwout bearing arrangement 48. The hydraulic annular cylinder 54 gives the actuating cylinder unit 52 a complicated construction. A simpler construction is shown in Fig. 7 in DE 19716600, having a cylindrical, non-concentrically placed hydraulic cylinder 54f. The non-concentric arrangement can result in the throwout bearing arrangement 48f becoming eccentrically loaded, which should be avoided. Various methods of compensating for this eccentric loading are shown in DE 19714226, for example with springs (Figs. 18-24), with multiple cylindrical, non-concentrically arranged hydraulic cylinders (Figs. 8-10) or with a forked lever arm (Figs. 28-33).

The solutions for a hydraulically operated, concentric clutch actuator with compressed air-based servo action shown in DE 19716600 and DE 19714226 can all be said to have become fairly complicated owing to the various measures taken to reduce inclined loading on the piston and throwout bearing. This also applies to access for maintenance, repair and replacement, where DE 10018678 gives examples of fairly intricate solutions. Furthermore, it is not desirable to have hydraulic arrangements inside the clutch housing, that is to say the part of Fig. 3 in this document that is denoted by 310. In the event of leakage, the hydraulic fluid can not only cause the disintegration of non-metallic parts but can also result in malfunctions due to low friction in torque-transmitting friction surfaces in the clutch 311.

A primary object of the present invention is to simplify the construction of a hydraulically operated concentric clutch actuator provided with compressed air based servo action, and to substantially reduce the inclined loading of the piston and throwout bearing. These objects must be met whilst at the same time largely disposing all hydraulic arrangements on the outside of the clutch housing, well sealed off from torque-transmitting friction surfaces in the clutch, and making the hydraulic arrangements easily accessible for maintenance and repair. A further object of the invention is to protect constituent components of the actuator from overload in the event of a failure of the compressed air supply.

### Summary of the invention

The solution by which the invention achieves this object is described with reference to the arrangement according to the invention in claim 1. The other patent claims describe preferred embodiments and developments of the arrangement according to the invention (claims 2 to 9).

The arrangement according to the invention comprises an actuator for a clutch located in a clutch housing in a vehicle drivetrain between an engine and a transmission and comprising
- an annular cylinder part located inside said clutch housing largely concentrically with an input shaft to the transmission, and having a cylinder chamber and an annular piston connected to a throwout bearing,
- an outer part situated largely outside said clutch housing, having:
- a hydraulic chamber connected to a fluid flow transmitted in a hydraulic line and corresponding to the movement and force from a clutch pedal,
- a hydraulic piston arrangement having a surface acted upon by the fluid pressure in said hydraulic chamber, in which the axial movement of the hydraulic piston arrangement largely corresponds to the movement of said clutch pedal,
- and a valve arrangement which is connected to said hydraulic chamber and which reduces a fluid pressure connected from a pressure source to a control pressure, the magnitude of which varies as a function of the fluid pressure in said hydraulic chamber,
- a position-sensing mechanism, which mechanically relays the position of said annular piston to said hydraulic piston arrangement,
- and a connecting duct, which permits a flow of fluid and evens out the fluid pressure between said valve arrangement and said cylinder chamber.

The invention is characterized in that a part of said piston arrangement or said position-sensing mechanism remote from said hydraulic chamber adjoins a fluid chamber, which is connected to or forms a part of said connecting duct or said cylinder chamber, so that in said fluid chamber said control pressure from said valve arrangement acts on said hydraulic piston arrangement with a force that is opposed to the force with which said fluid pressure in said hydraulic chamber acts on said hydraulic piston arrangement.

The advantage of this is that it affords a simpler construction for the type of actuator, whilst at the same time facilitating assembly and maintenance.

According to a first embodiment of the arrangement according to the invention said outer part is arranged on the outside of said clutch housing so that the outer part can be detached from the clutch housing without separating the engine and the transmission. This makes servicing and maintenance even easier.

According to a second embodiment of the arrangement according to the invention friction surfaces of the clutch are physically separated from hydraulic fluid in the hydraulic chamber by at least two physically separated sealing arrangements disposed between the hydraulic chamber and the friction surfaces.

This together with the placing of the outer part affords the advantage that the risk of the torque-transmitting friction surfaces in the clutch being exposed to hydraulic fluid is minimized. The torque-transmitting function of the clutch becomes more assured even in the event of any leakage of hydraulic fluid.

According to a third embodiment of the arrangement according to the invention the position-sensing mechanism comprises at least one rocker arm, which is articulated at a fixed point. This means that the end of the rocker arm directed towards said annular piston is in contact with the annular piston via a fixed roller element, articulated on the end of the rocker arm, and the point of contact between the roller element and the annular piston is arranged closer to the geometric center of said input shaft.

The advantage of this embodiment is that the risk of inclined loading of the annular piston is reduced, whilst at the same time retaining a relatively simple design construction.

According to a fourth embodiment of the arrangement according to the invention the end of the hydraulic piston arrangement remote from the hydraulic chamber comprises a conical cavity. This facilitates assembly of the hydraulic piston arrangement and the position-sensing mechanism.

According to a fifth embodiment of the arrangement according to the invention an overload spring is arranged in the position-sensing mechanism and/or in the hydraulic piston arrangement. The overload spring is triggered in the absence of said fluid pressure, which minimizes the risk of load damage to the position-sensing mechanism and minimizes the risk of inclined loading of the annular piston.

Further embodiments of the invention are set forth in the dependent patent claims.

### Brief description of the drawings

Fig. 1 shows a schematic representation of one example of a drivetrain according to the state of the art having a side-mounted clutch control. Fig. 2 shows schematic views of a clutch actuator according to the state of the art in different conditions. Fig. 3 shows a schematic representation of one example of a drivetrain according to the state of the art having a concentrically arranged clutch control.

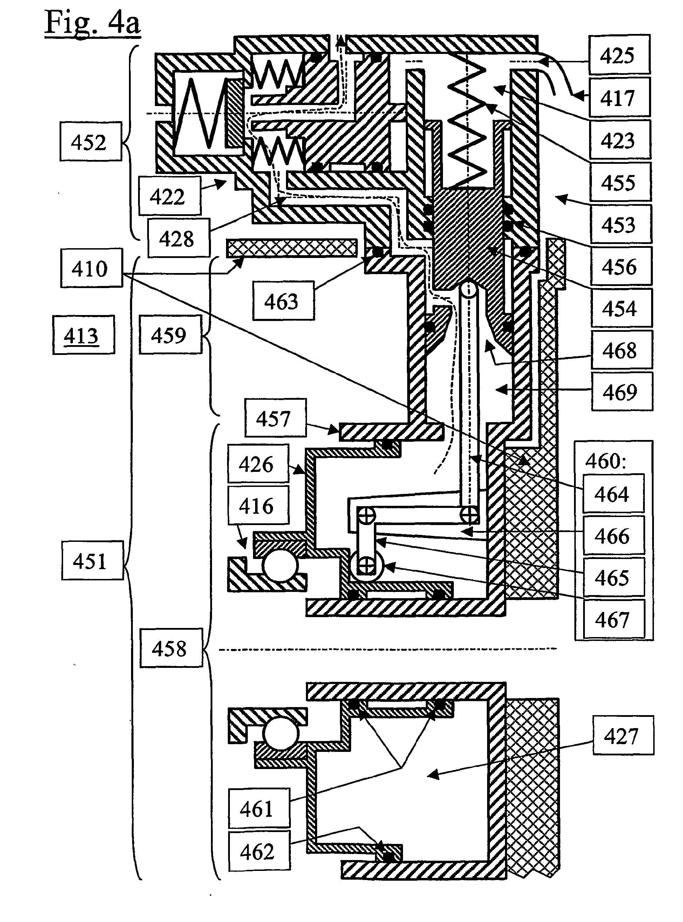

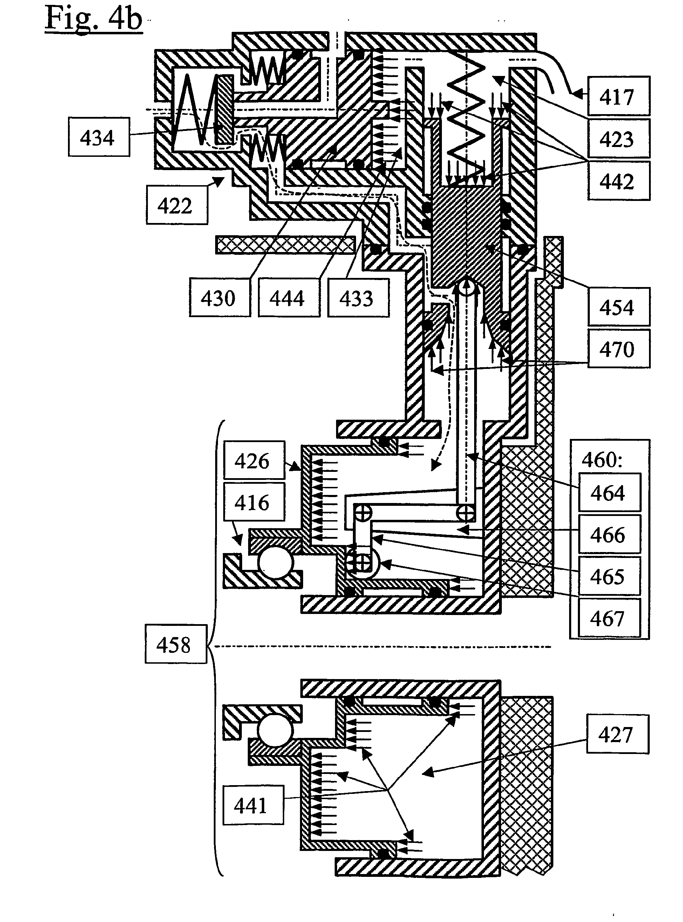

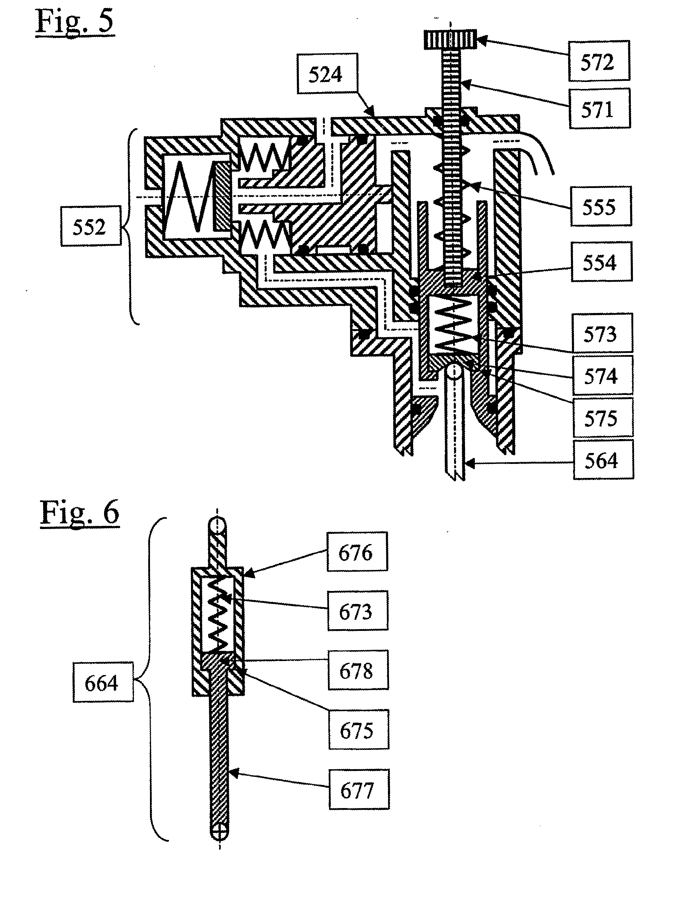

Fig. 4 shows schematic views of a first embodiment of a clutch actuator according to the invention in different conditions. Fig. 5 shows a schematic representation of one embodiment according to the invention of a clutch actuator having overload protection and a measuring arrangement for measuring the thickness of the clutch plates. Fig. 6 shows a schematic representation of a further embodiment according to the invention of an overload protection for a clutch actuator.

### Detailed description of preferred embodiments

Fig. 4a shows a hydraulically operated concentric clutch actuator 413 with compressed air-based servo action. The clutch actuator 413 comprises an inner part 451 and an outer part 452. The inner part 451 is located inside and fixed to the clutch housing 410. The outer part 452 is located on the outside of the clutch housing 410 and fixed to the inner part 451 through an opening in the clutch housing 410.

The outer part 452 comprises a valve part 422 and a hydraulic cylinder part 453. The function of the valve part 422 is in principle the same as for the valve part 222 in Figs. 2a, 2b and 2c. The hydraulic cylinder part 453 comprises a hydraulic duct 425 to which a hydraulic line 417 from a clutch pedal (not shown), a hydraulic chamber 423, a hydraulic piston 454 and a pre-tensioning spring 455 are connected. The hydraulic chamber 423 is sealed off at the hydraulic piston 454 by a sealing arrangement 456.

The inner part 451 comprises a housing 457, an annular cylinder part 458, a connection part 459 and a position-sensing mechanism 460. The annular cylinder part 458 comprises an annular servo chamber 427, an annular piston 426, an internal sealing and bearing arrangement 461, an external sealing arrangement 462 and a throwout bearing 416, one end of which bears against a clutch (not shown).

The connection part 459 connects the annular cylinder part 458 to the outer part 452. A sealing arrangement 463 forms a seal in the contact between the outer part 452 and the connection part 459. Via a servo duct 428 in the outer part 452 a pneumatic connection is in this way achieved between the valve part 422 and the servo chamber 427. Fig. 4a shows the conditions with the clutch in the engaged position, corresponding to Fig. 2a. A dashed line in Fig. 4a indicates how any compressed air in the servo chamber 427 can then flow out into the surroundings.

The position-sensing mechanism 460 comprises a push rod 464, a rocker arm 465 (L-shaped in the embodiment shown), which is articulated in a projection 466 of the housing 457, and a roller element 467. The push rod 464 and the roller element 467 are each firmly articulated at either end of the rocker arm 465. In the embodiment shown the roller element is a roller.

Other shapes, such as a spherical shape, for example, may also be possible. The end of the push rod 464 remote from the rocker arm 465 is inserted into the bottom of the conical cavity 468 in the hydraulic piston 454.

The pre-tensioning spring 455 presses the hydraulic piston 454 against the push rod 464, which via the rocker arm 465 presses the roller element 467 against the annular piston 426. In this way a flexibility is obtained between the movement of the hydraulic piston 454 and the movement of the annular piston 426. This means that a certain position of the clutch pedal is matched by a certain position of the throwout bearing 416. This is important for the working of the valve part 422, in the same way as was found to be the case in the side-mounted clutch actuator 213 according to the state of the art shown in Figs. 2a, 2b and 2c.

The outer part 452 can be dismantled for maintenance, repair or replacement without needing to detach the transmission from the engine. The hydraulic piston 454 follows the outer part 452, whilst the push rod 464 remains in the inner part 451. When fitting the outer part 452 the end of the push rod 464 is caught by and guided down into the bottom of the conical cavity 468 of the hydraulic piston 454. No separate arrangement is needed for centering of the push rod 464 in the connecting chamber 469 in the connecting part 459. Alternatively the push rod 464 could have a conical cavity.

All hydraulic arrangements are collected together in the outer part 452. If hydraulic fluid should manage to get into the space inside the clutch housing 410, two physically separated sealing arrangements will have to be passed, such as the sealing arrangement 456 and any other one of the sealing arrangements 461, 462, 463. This provides a large measure of security against leaking hydraulic fluid causing reduced friction in torque-transmitting friction surfaces in the clutch.

Fig. 4b shows the conditions when the clutch pedal is depressed. The fluid pressure then increases in the hydraulic line 417, the hydraulic chamber 423 and the connecting valve hydraulic chamber 433. The hydraulic piston 454 will be acted upon by a hydraulic force 442 directed downwards in Fig. 4b and the valve piston 430 will be carried to the left by a hydraulic force 444. The seat valve 434 is thereby opened and compressed air can flow in towards the annular servo chamber 427 in the annular cylinder part 458. A servo force 441 directed towards the left then acts on the annular piston 426. In addition, an opposing force 470 from the compressed air, directed upwards in the figure, acts upon the hydraulic piston 454. The opposing force 470 is thereby opposed to the hydraulic force 442. This means that the force that is transmitted between the hydraulic piston 454 and the push rod 464 is considerably less than in the absence of the opposing force 470. The force acting between the roller element 467 and the annular piston 426 is then also considerably reduced. This ultimately results in considerably less inclined loading of the annular piston 426 and the throwout bearing 416. Despite the conditions for the valve part 422 having been the same as for the corresponding valve part 222 in Figs. 2a, 2b and 2c, with a large piston area of the hydraulic piston 454, it has been possible, by simple means, to obtain a low inclined loading of the annular piston 426.

The axial position of the throwout bearing 416 when the clutch is engaged is an indirect measurement of the wear of the torque-transmitting friction surfaces in the clutch. This axial position can be measured from the position of the push rod 464 when the outer part 452 is removed. Alternatively, the position of the hydraulic piston 454 could be measured in some other suitable way when the outer part 452 is fitted. Fig. 5 clearly shows such a solution. The hydraulic piston 554 is provided with a measuring stick 571, which protrudes through a sealed opening in the housing 524 on the outer part 552. The position of the measuring stick 571 can easily be measured, which gives an indirect measurement of the wear of the torque-transmitting friction surfaces (usually plates) of the clutch. The measuring stick 571 has a head 572, which prevents the pre-tensioning spring 555 forcing the hydraulic piston 554 out of the housing 524 when the outer part 552 is removed.

If the clutch pedal is depressed in the absence of a sufficient compressed air supply, a very large force can be obtained on the position-sensing mechanism 460 in Figs. 4a and 4b. This means that the parts in the position-sensing mechanism 460 would need to be designed with significantly larger dimensions than are required in normal operation, and that the annular piston 426 receives very heavy inclined loading.

In order to avoid this, the hydraulic piston 554 in Fig. 5 is provided with an overload protection comprising an overload spring 573, which presses an overload piston 574 against a seat 575 in the hydraulic piston 554. The upper end of the push rod 564 bears against a depression in the overload piston 574. Should the force on the push rod 564 become greater than the pre-tensioning force with which the overload spring 573 presses the overload piston 574 against the seat 575, the overload piston 574 will lift from the seat 575. The force on the push rod 564 is then limited to the force in the overload spring 573.

Fig. 6 shows an alternative overload protection. The push rod 664 is here divided into a first part 676 and a second part 677. An overload spring 673 presses a head-shaped section 678 on the second part 677 against a seat 675 on the first part 676. Should the force on the push rod 664 exceed the pre-tensioning force in the overload spring 673, the head-shaped section 678 will lift from the seat 675. Alternatively the rocker arm 465 could be designed in two parts with a pre-tensioned spring between them.

The invention must not be regarded as being limited to the exemplary embodiments described above, a number of further variants and modifications being feasible without departing from the scope of the following patent claims.

## Claims

1. An actuator (413) for a clutch located in a clutch housing (410) in a vehicle drivetrain between an engine and a transmission and comprising
- an annular cylinder part (458) located inside said clutch housing (410) largely concentrically with an input shaft to the transmission, and having a cylinder chamber (427) and an annular piston (426) connected to a throwout bearing (416),
- an outer part (452, 552) situated largely outside said clutch housing (410), having:
- a hydraulic chamber (423) connected to a fluid flow transmitted in a hydraulic line (417) and corresponding to the movement and force from a clutch pedal,
- a hydraulic piston arrangement (454, 554) having a surface acted upon by the fluid pressure in said hydraulic chamber (423), in which the axial movement of the hydraulic piston arrangement (454, 554) largely corresponds to the movement of said clutch pedal,
- and a valve arrangement (422) which is connected to said hydraulic chamber (423) and which reduces a fluid pressure connected from a pressure source to a control pressure, the magnitude of which varies as a function of the fluid pressure in said hydraulic chamber (423),
- a position-sensing mechanism (460), which mechanically relays the position of said annular piston (426) to said hydraulic piston arrangement (454, 554),
- and a connecting duct (428, 469), which permits a flow of fluid and evens out the fluid pressure between said valve arrangement (422) and said cylinder chamber (427),
**characterized in that** a part of said hydraulic piston arrangement (454, 554) or said position-sensing mechanism (460) remote from said hydraulic chamber (423) adjoins a fluid chamber (469), which is connected to or forms a part of said connecting duct (428, 469) or said cylinder chamber (427), so that in said fluid chamber (469) said control pressure from said valve arrangement (422) acts on said hydraulic piston arrangement (454, 554) with a force (470) that is opposed to the force (442) with which said fluid pressure in said hydraulic chamber (423) acts on said hydraulic piston arrangement (454, 554).

2. The actuator as claimed in claim 1, **characterized in that** said outer part (452, 552) is arranged on the outside of said clutch housing (410) so that the outer part can be detached from the clutch housing without separating the engine and the transmission.

3. The actuator as claimed in claim 1, **characterized in that** friction surfaces of the clutch are physically separated from hydraulic fluid in the hydraulic chamber (423) by at least two physically separated sealing arrangements disposed between the hydraulic chamber and the friction surfaces.

4. The actuator as claimed in the preceding claim, **characterized in that** a first such sealing arrangement is designed to form a seal between the hydraulic piston arrangement (454, 554) and the hydraulic chamber (423) and that a second such sealing arrangement is designed to form a seal between the cylinder chamber (427) and annular piston (426).

5. The actuator as claimed in claim 1, **characterized in that** the position-sensing mechanism (460) comprises at least one rocker arm, which is articulated at a fixed point (466), the end of the rocker arm directed towards said annular piston (426) being in contact with the annular piston via a fixed roller element (467), articulated on the end of the rocker arm, the point of contact between the roller element and the annular piston being arranged closer to the geometric center of said input shaft, with the object of minimizing the inclined loading on the annular piston (426).

6. The actuator as claimed in claim 1, **characterized in that** the end of the hydraulic piston arrangement (454, 554) remote from the hydraulic chamber (423) comprises a conical cavity (468) with the object of facilitating assembly of the hydraulic piston arrangement (454, 554) and the position-sensing mechanism (460).

7. The actuator as claimed in claim 1, **characterized in that** an overload spring (573, 673) is arranged in the position-sensing mechanism (460) and/or in the hydraulic piston arrangement (454, 554), with the object, in the absence of said fluid pressure, of minimizing the risk of load damage to the position-sensing mechanism (460) and minimizing the risk of inclined loading of the annular piston (426).

8. The actuator as claimed in claim 1, **characterized in that** a measuring stick (571) is at one end fixed to the hydraulic piston arrangement (554) and at its other end simultaneously protrudes through an opening in the outer part (552), for the purpose of indirectly measuring the axial position of the throwout bearing (416) by measuring the protruding part of the measuring stick (571).

9. The actuator as claimed in the preceding claim, **characterized in that** a head (572) is arranged on the protruding end of the measuring stick (571), for the purpose of preventing the hydraulic piston arrangement (554) being forced or falling out of the outer part (552) when removing the outer part (552) from the clutch housing (410).

## Patentansprüche

1. Stellglied (413) für eine Kupplung, die in einem Kupplungsgehäuse (410) in einem Fahrzeugantriebsstrang zwischen einem Motor und einem Getriebe angeordnet ist, und umfassend
- einen ringförmigen Zylinderteil (458), der innerhalb des Kupplungsgehäuses (410) weitgehend konzentrisch zu einer Eingangswelle zum Getriebe angeordnet ist und eine Zylinderkammer (427) und einen ringförmigen Kolben (426) aufweist, der mit einem Ausrücklager (416) verbunden ist,
- einen äußeren Teil (452, 552), der weitgehend außerhalb des Kupplungsgehäuses (410) liegt und aufweist:
- eine Hydraulikkammer (423), die mit einer Fluidströmung verbunden ist, die in einer Hydraulikleitung (417) übertragen wird und der Bewegung und Kraft von einem Kupplungspedal entspricht,
- eine Hydraulikkolbenanordnung (454, 555), die eine Oberfläche aufweist, auf die der Fluiddruck in der Hydraulikkammer (423) wirkt, wobei die Axialbewegung der Hydraulikkolbenanordnung (454, 554) weitgehend der Bewegung des Kupplungspedals entspricht,
- und eine Ventilanordnung (422), die an die Hydraulikkammer (423) angeschlossen ist und einen Fluiddruck von einer Druckquelle auf einen Steuerdruck reduziert, dessen Höhe als Funktion des Fluiddrucks in der Hydraulikkammer (423) variiert,
- einen Positionserfassungsmechanismus, der die Position des ringförmigen Kolbens (426) mechanisch an die Hydraulikkolbenanordnung (454, 554) weiterleitet,
- und eine Verbindungsleitung (428, 469), die eine Fluidströmung ermöglicht und den Fluiddruck zwischen der Ventilanordnung (422) und der Zylinderkammer (427) ausgleicht,
**dadurch gekennzeichnet, dass** ein von der Hydraulikkammer (423) abgewandter Teil der Hydraulikkolbenanordnung (454, 554) oder des Positionserfassungsmechanismus (460) an eine Fluidkammer (469) angrenzt, die mit einem Teil der Verbindungsleitung (428, 469) oder der Zylinderkammer (427) verbunden ist oder diesen bildet, so dass in der Fluidkammer (469) der Steuerdruck von der Ventilanordnung (422) auf die Hydraulikkolbenanordnung (454, 554) mit einer Kraft (470) wirkt, die der Kraft (442) entgegengesetzt ist, mit der der Fluiddruck in der Hydraulikkammer (423) auf die Hydraulikkolbenanordnung (454, 554) wirkt.

2. Stellglied nach Anspruch 1, **dadurch gekennzeichnet, dass** der äußere Teil (452, 552) an der Außenseite des Kupplungsgehäuses (410) so angeordnet ist, dass der äußere Teil von dem Kupplungsgehäuse ohne Trennung des Motors und des Getriebes gelöst werden kann.

3. Stellglied nach Anspruch 1, **dadurch gekennzeichnet, dass** Reibungsflächen der Kupplung physikalisch von der Hydraulikflüssigkeit in der Hydraulikkammer (423) durch wenigstens zwei physikalisch getrennte Dichtanordnungen getrennt sind, die zwischen der Hydraulikkammer und den Reibungsflächen angeordnet sind.

4. Stellglied nach dem vorhergehenden Anspruch, **dadurch gekennzeichnet, dass** eine erste solche Dichtanordnung so ausgelegt ist, dass sie eine Dichtung zwischen der Hydraulikkolbenanordnung (454, 554) und der Hydraulikkammer (423) bildet, und dass eine zweite solche Dichtanordnung so ausgelegt ist, dass sie eine Dichtung zwischen der Zylinderkammer (427) und dem ringförmigen Kolben (426) bildet.

5. Stellglied nach Anspruch 1, **dadurch gekennzeichnet, dass** der Positionserfassungsmechanismus (460) wenigstens einen Kniehebel umfasst, der an einer festen Stelle (466) angelenkt ist, wobei das in Richtung des ringförmigen Kolbens (426) gerichtete Ende des Kniehebels mit dem ringförmigen Kolben über ein befestigtes Walzenelement (467) in Kontakt steht, das an dem anderen Ende des Kniehebels gelenkig gelagert ist, wobei der Kontaktpunkt zwischen dem Walzenelement und dem ringförmigen Kolben näher zu dem geometrischen Zentrum der Eingangswelle angeordnet ist, um die schräge Belastung auf den ringförmigen Kolben (426) zu minimieren.

6. Stellglied nach Anspruch 1, **dadurch gekennzeichnet, dass** das von der Hydraulikkammer (423) abgewandte Ende der Hydraulikkolbenanordnung (454, 554) einen konischen Hohlraum (468) umfasst, um den Zusammenbau der Hydraulikkolbenanordnung (454, 554) und des Positionserfassungsmechanismus (460) zu vereinfachen.

7. Stellglied nach Anspruch 1, **dadurch gekennzeichnet, dass** eine Überlastfeder (573, 673) in dem Positionserfassungsmechanismus (460) und/oder in der Hydraulikkolbenanordnung (454, 554) angeordnet ist, um bei Abwesenheit des Fluiddrucks das Risiko eines Belastungsschadens des Positionserfassungsmechanismus (460) zu minimieren und das Risiko einer schrägen Belastung des ringförmigen Kolbens (426) zu minimieren.

8. Stellglied nach Anspruch 1, **dadurch gekennzeichnet, dass** ein Messstab (571) an einem Ende an der Hydraulikkolbenanordnung (554) befestigt ist und sein anderes Ende gleichzeitig durch eine Öffnung in dem äußeren Teil (552) vorsteht, um die Axialposition des Ausrücklagers (416) durch Messung des vorstehenden Teils des Messstabs (571) indirekt zu messen.

9. Stellglied nach dem vorhergehenden Anspruch, **dadurch gekennzeichnet, dass** ein Kopf (572) an dem vorstehenden Ende des Messstabs (571) angeordnet ist, um zu verhindern, dass die Hydraulikkolbenanordnung (454) aus dem Außenteil (552) gedrückt wird oder herausfällt, wenn der äußere Teil (552) aus dem Kupplungsgehäuse (410) entfernt wird.

## Revendications

1. Actionneur (413) pour un embrayage situé dans un carter d'embrayage (410) dans un train de transmission de véhicule entre un moteur et une transmission, et comprenant
- une partie de cylindre annulaire (458) située à l'intérieur dudit carter d'embrayage (410) de manière concentrique largement avec un arbre d'entrée sur la transmission, et ayant une chambre de cylindre (427) et un piston annulaire (426) relié à une butée de débrayage (416),
- une partie externe (452, 552) située largement à l'extérieur dudit carter d'embrayage (410), ayant :
- une chambre hydraulique (423) reliée à un flux de fluide transmis dans une conduite hydraulique (417) et correspondant au déplacement et à la force provenant d'une pédale d'embrayage,
- un agencement de piston hydraulique (454, 554) ayant une surface sur laquelle la pression hydraulique agit dans ladite chambre hydraulique (423), dans laquelle le déplacement axial de l'agencement de piston hydraulique (454, 554) correspond largement au déplacement de ladite pédale d'embrayage,
- et un agencement de soupape (422) qui est relié à ladite chambre hydraulique (423) et qui réduit une pression hydraulique provenant d'une source de pression à une pression de commande, dont l'ampleur varie en fonction de la pression hydraulique dans ladite chambre hydraulique (423),
- un mécanisme de détection de position (460), qui transmet mécaniquement la position dudit piston annulaire (426) audit agencement de piston hydraulique (454, 554),
- et une conduite de raccord (428, 469), qui permet un écoulement de fluide et évacue à l'extérieur la pression hydraulique entre ledit agencement de soupape (422) et ladite chambre de cylindre (427),
**caractérisé en ce qu'**une partie dudit agencement de piston hydraulique (454, 554) ou dudit mécanisme de détection de position (460) éloigné de ladite chambre hydraulique (423) rejoint une chambre hydraulique (469), qui est reliée à une partie de ladite conduite de raccord (428, 469) ou de ladite chambre de cylindre (427), ou forme une partie de celle-ci, de manière à ce que dans ladite chambre hydraulique (469), ladite pression de commande provenant dudit agencement de soupape (422) agit sur ledit agencement de piston hydraulique (454, 554) avec une force (470) qui est opposée à la force (442) avec laquelle ladite pression hydraulique dans ladite chambre hydraulique (423) agit sur ledit agencement de piston hydraulique (454, 554).

2. Actionneur selon la revendication 1, **caractérisé en ce que** ladite partie externe (452, 552) est agencée sur l'extérieur dudit carter d'embrayage (410) de manière à ce que la partie externe puisse être retirée du carter d'embrayage sans séparer le moteur de la transmission.

3. Actionneur selon la revendication 1, **caractérisé en ce que** des surfaces de frottement de l'embrayage sont physiquement séparées du fluide hydraulique dans la chambre hydraulique (423) par au moins deux agencements d'étanchéité séparés physiquement disposés entre la chambre hydraulique et les surfaces de frottement.

4. Actionneur selon la revendication précédente, **caractérisé en ce qu'**un premier agencement d'étanchéité de ce type est conçu pour former un joint d'étanchéité entre l'agencement de piston hydraulique (454, 554) et la chambre hydraulique (423), et **en ce qu'**un second agencement d'étanchéité de ce type est conçu pour former un joint d'étanchéité entre la chambre de cylindre (427) et un piston annulaire (426).

5. Actionneur selon la revendication 1, **caractérisé en ce que** le mécanisme de détection de position (460) comprend au moins un culbuteur, qui est articulé au niveau d'un point fixe (466), l'extrémité du culbuteur étant dirigée vers ledit piston annulaire (426) qui est en contact avec le piston annulaire via un élément de galet fixe (467), articulé sur l'extrémité du culbuteur, le point de contact entre l'élément de galet et le piston annulaire étant agencé plus proche du centre géométrique dudit arbre d'entrée dans le but de réduire au minimum le chargement incliné sur le piston annulaire (426).

6. Actionneur selon la revendication 1, **caractérisé en ce que** l'extrémité de l'agencement de piston hydraulique (454, 554) éloigné de la chambre hydraulique (423) comprend une cavité conique (468) dans le but de faciliter l'assemblage de l'agencement de piston hydraulique (454, 554) et du mécanisme de détection de position (460).

7. Actionneur selon la revendication 1, **caractérisé en ce qu'**un ressort de surcharge (573, 673) est agencé dans le mécanisme de détection de position (460) et/ou dans l'agencement de piston hydraulique (454, 554), dans le but, en l'absence de ladite pression hydraulique, de réduire au minimum le risque de détérioration due à la charge du mécanisme de détection de position (460) et de réduire au minimum le risque de chargement incliné du piston annulaire (426).

8. Actionneur selon la revendication 1, **caractérisé en ce qu'**une tige de mesure (571) se trouve au niveau d'une première extrémité fixée sur l'agencement de piston hydraulique (554) et fait saillie simultanément au niveau de son autre extrémité à travers une ouverture dans la partie externe (552) dans le but de mesurer indirectement la position axiale de la butée de débrayage (416) en mesurant la partie saillante de la tige de mesure (571).

9. Actionneur selon la revendication précédente, **caractérisé en ce qu'**une tête (572) est agencée sur l'extrémité saillante de la tige de mesure (571), dans le but d'empêcher que l'agencement de piston hydraulique (554) soit poussé ou tombe de la partie externe (552) lors du retrait de la partie externe (552) depuis le carter d'embrayage (410).
